**Europäisches Patentamt**

**European Patent Office**

**Office européen des brevets**

(11) Veröffentlichungsnummer: **0 132 218**
**A2**

## (12) EUROPÄISCHE PATENTANMELDUNG

(21) Anmeldenummer: **84730046.4**

(22) Anmeldetag: **02.05.84**

(51) Int. Cl.⁴: **B 29 C 47/02**

(30) Priorität: **12.07.83 DE 3325439**

(43) Veröffentlichungstag der Anmeldung:
**23.01.85 Patentblatt 85/4**

(84) Benannte Vertragsstaaten:
**AT BE FR NL**

(71) Anmelder: **MANNESMANN Aktiengesellschaft**
**Mannesmannufer 2**
**D-4000 Düsseldorf 1(DE)**

(72) Erfinder: **Landgraf, Helmut, Dipl. Phys.**
**Aubruchsgraben 90**
**D-4100 Duisburg 46(DE)**

(74) Vertreter: **Meissner, Peter E., Dipl.-Ing. et al,**
**Herbertstrasse 22**
**D-1000 Berlin 33(DE)**

(54) **Vorrichtung zum Ummanteln von Stahlrohren.**

(57) Die Erfindung betrifft eine Vorrichtung zum Ummanteln von Stahlrohren mit thermoplastischem Kunststoff, die einen Extruderkopf mit Schlitzdüse und in Transportrichtung der Rohre gesehen, hinter der Schlitzdüse eine Kühlstrecke aufweist. Um eine Vorrichtung für die Stahlrohrummantelung zu schaffen, bei der alle bisher bestehenden Mängel vermieden werden, wird vorgeschlagen, daß zwischen der Schlitzdüse (1, 2) und der Eintrittsseite der Kühlstrecke mindestens eine das ummantelte Rohr (10) eng umschließende Gleitringdichtung angeordnet ist, dessen Gleitring ein elastisch-weicher Schaumstoffkörper (3) mit offenen Poren ist, und die mit mindestens einer Zuleitung (5) für eine Kühlflüssigkeit versehen ist.

F i g.1

EP 0 132 218 A2

- 1 -

Die Erfindung richtet sich auf eine Vorrichtung zur Ummantelung von Stahlrohren mit Kunststoff gemäß dem Oberbegriff des Anspruches 1.

Es ist bekannt, Stahlrohre mit einer thermoplastischen Kunststoffschicht dadurch zu ummanteln, daß sie in erwärmten Zustand durch die als Ringschlitzdüse ausgebildete Schlitzdüse eines Extruderkopfes hindurchgeführt und dabei mit einem Folienschlauch überzogen werden, der mittels eines Haftklebers mit der Rohroberfläche verbunden wird (z.B. DE-PS 22 22 911 oder DE-OS 17 04 851) Für Rohre größerer Durchmesser ist es bekannt, die Ummantelung durch schraubenlinienförmiges Umwickeln mit einer streifenförmigen Thermoplast-Folie zu erzeugen, wobei die Rohre in Umdrehung versetzt und in Längsrichtung an einer als Breitschlitzdüse ausgebildete Schlitzdüse eines Extruderkopfes vorbeibewegt werden (z.B. DE-PS 17 71764 oder DE-PS 19 33 206). Auch in diesem Fall erfolgt die Verbindung der Kunststoffschicht mit der Rohroberfläche durch Verkleben mit einem Haftkleber.

Mit der DE-PS 15 54 776 ist es für das Ummanteln mit einer Schlauchfolie bekanntgeworden, der Ringschlitzdüse eine Unterdruckkammer zuzuordnen, die an eine Vakuumpumpe angeschlossen ist, welche zwischen der Rohroberfläche und der aus der Ringschlitzdüse austretenden Schlauchfolie einen Unterdruck erzeugt. Damit wird der

- 2 -

Zweck verfolgt, daß sich der Schlauch eng an das Rohr anlegt. Als Abdichtung gegen den innerhalb der Düse erzeugten Unterdruck dient eine Manschette, die an der Rohreintrittsseite des Extruderkopfes angeordnet ist und das unbeschichtete Rohr eng umschließt.

Die zulässige Höhe des Unterdruckes und damit die anpressende Wirkung des äußeren Luftdruckes sind dabei begrenzt durch die geringe mechanische Widerstandsfähigkeit der zwischen Extruderwerkzeug und dem zu beschichtenden Rohr aufgespannten warmen thermoplastischen Folie. Die Abdichtung der Unterdruckkammer durch eine Manschette aus weichem, elastischem Material kann zu starkem Verschleiß der Manschette auf der mit Stahlkies gestrahlten und damit rauhen Rohroberfläche führen. Außerdem kann der Abrieb der Manschette die Haftung der Beschichtung auf dem Rohr beeinträchtigen. Die Verwendung metallischer Dichtelemente kann umgekehrt die gestrahlte Rohroberfläche beeinträchtigen.

Besondere Schwierigkeiten treten auf, wenn Rohre beschichtet werden sollen, die in einem unmittelbar vorausgehenden Arbeitsschritt mit einem Primer (z.B. Epoxiharz) versehen werden, der bei der Verarbeitungstemperatur noch viskos oder mechanisch leicht verletzbar ist.

Diesen bekannten Verfahren ist gemeinsam, daß die Rohre im Anschluß an die Ummantelung durch eine Kühlstrecke geführt werden, damit die noch warme Kunststoffschicht möglichst schnell auf Raumtemperatur abgekühlt wird. Hierfür ist es bekannt, auf den beschichteten Rohren einen Wasserfilm durch Berieseln mit Kühlwasser geringen Druckes zu bilden. Hierbei kann der Fall eintreten, daß Spritzwasser auf die noch weiche Thermoplastschicht auftrifft, wenn das frisch ummantelte Rohr die Beschichtungsstation (Ringschlitzdüse oder Breitschlitzdüse) verläßt.
Da diese Schicht noch sehr druckempfindlich ist, können die Wassertropfen unerwünschte Narben hinterlassen, die auch nach der Abkühlung erhalten bleiben.

Die Erfindung geht aus von der DE-OS 17 29 309, die eine Andruckvorrichtung für die Kunststoffummantelung zwischen Extruderkopf und Kühlstrecke aufweist. Diese Vorrichtung kann als Druckbacken ausgebildet sein, aber es wird auch vorgeschlagen, den Druck auf den Kunststoff durch aus Düsen austretendes Wasser zu erzeugen. Die mechanische Andruckvorrichtung kann zu Beschädigungen der Ummantelungsoberfläche führen, während durch das Druckwasser ein Sprüheffekt auftritt, der die vorstehend genannten Nachteile hervorrufen kann.

Aufgabe der Erfindung ist es daher, die eingangs genannte Vorrichtung so auszubilden, daß sowohl ein Andrücken des Kunststoffes möglich ist, wie auch das Auftreffen von Spritzwasser auf empfindliche Teile der noch frischen Beschichtung vermieden werden kann. Gelöst wird diese Aufgabe erfindungsgemäß mit den im Patentanspruch 1 angegebenen Merkmalen.

Vorzugsweise Weiterbildungen ergeben sich aus den Unteransprüchen.

Der Erfindung liegt der Gedanke zugrunde, das frischummantelte Stahlrohr mit einer Gleitringdichtung zu umfassen, die im wesentlichen aus einem ringförmigen elastisch-weichen Schaumstoffkörper mit mindestens teilweise offenen Poren besteht. Durch die Poren des Schaumstoffkröpers wird der Rohrummantelung eine Kühlflüssigkeit, z.B. Wasser, zugeführt. Dadurch wird eine gleichmäßige Einwirkung der Kühlflüssigkeit auf die frische Ummantelung erzielt; auf der Ummantelung bildet sich ein kühlender und gleichzeitig schmierender Flüssigkeitsfilm. Der Einsatz derartiger Gleitringdichtungen erlaubt es, beliebige Bereiche des beschichteten Stahlrohres wirksam gegen die Umgebung abzuschotten.

In Weiterbildung der Erfindung wird vorgeschlagen, den Schaumstoffkörper der Gleitringdichtung in einem ringförmigen Blechbehälter anzuordnen, an den die Zuleitungen für die Kühlflüssigkeit angeschlossen sind. Um die Einfädelung eines Stahlrohres in die Gleitringdichtung zu erleichtern, wird die Ringöffnung des Schaumstoffkörpers an der für den Rohreintritt vorgesehenen Seite vorteilhaft trichterförmig und nicht wie an der für den Rohraustritt vorgesehenen Seite zylindrisch ausgebildet. Weiterhin ist es vorteilhaft, den Schaumstoffkörper der Gleitringdichtung aus mehreren Teilstücken zusammenzusetzen, die im Betriebszustand fest aneinandergedrückt sind. Es empfiehlt sich auch, den Schaumstoffkörper aus zwei Halbringen und den Blechbehälter entsprechend aus zwei aufklappbaren Hälften zusammenzusetzen. Darüberhinaus können die beiden Gehäusehälften in der Teilungsebene durch Gehäusewände gegeneinander abgeschottet und an je eine getrennt regelbare Zuleitung für die Kühlflüssigkeit angeschlossen sein. Durch Regelung der Mühlmittelmenge in den Zuleitungen kann z.B. ein Ausgleich für die sonst durch den unterschiedlichen hydrostatischen Druck (Bei Großrohren kann die Druckdifferenz bis zu etwa 2 m WS betragen.) bedingten unterschiedlichen Kühlmittelmengen auf der unteren und oberen Hälfte der Oberfläche des beschichteten Stahlrohres erzielt werden. Dem Zweck der Kühlflüssigkeitsmengenregelung dient es auch, den Schaumstoffkörper mit einem von unten nach oben hin abnehmenden Strömungswiderstand auszubilden. Der Strömungswiderstand läßt sich durch z.B. einen unterschiedlichen Porenaufbau

des Schaumstoffkörpers in vertikaler Richtung variieren. Andererseits kann er auch dadurch beeinflußt werden, daß Teile der Oberfläche der Ringöffnung des Schaumstoffkörpers mit einer dichten Beschichtung, z.B. aus Silikon-Kautschuk, versehen werden.

Um die Wirksamkeit der Gleitringdichtung auch im Falle einer Verlagerung der Rohrachse, z.B. infolge von Schwingungen beim Transport der Stahlrohre, jederzeit zu gewährleisten, wird in Weiterbildung der Erfindung vorgeschlagen, die Gleitringdichtung an einer elastisch beweglichen Haltevorrichtung zu befestigen. Ferner ist es möglich, aufgrund des Abschottungseffektes der Gleitringdichtungen verschiedene Kühlzonen mit unterschiedlichen Kühlbedingungen aufzubauen, in dem mehrere Gleitringdichtungen im Abstand axial hintereinander entlang dem beschichteten Rohr angeordnet werden.

Schließlich wird in vorteilhafter Weiterbildung der Erfindung vorgeschlagen, die Gleitringdichtung zur Abdichtung einer Überdruckkammer zu benutzen, die anstelle der beschriebenen Unterdruckkammer verwendet wird. Die Überdruckkammer schließt sich mit ihrem im wesentlichen zylinderförmigen Gehäuse unmittelbar an die Ringschlitzdüse des Extruderkopfes an, so daß die Rohraustrittsseite des Extruderkopfes und die Rohreintrittsseite der Überdruckkamer abgedichtet miteinander verbunden sind. An der Rohreintrittsseite der Überdruckkammer wird der eingeleitete
Überdruck durch die Innenoberfläche des Extruderkopfes und die Außenoberfläche der noch weichen
thermoplastischen Schlauchfolie abgedichtet, während
die erforderliche Dichtwirkung auf der Rohraustrittsseite der Überdruckkammer durch eine dort
angeordnete und mit dem Gehäuse der Überdruckkammer
dicht verbundene Gleitringdichtung erzielt wird.
Durch diese Anordnung wird erreicht, daß der Thermoplastschlauch in ähnlicher Weise wie durch die Wirkung
einer Unterdruckkammer auf das Rohr aufgepreßt wird,
ohne daß die beschriebenen Nachteile einer Unterdruckdichtmanschette in Kauf genommen werden müssen.
Die Tragfähigkeit der warmen thermoplastischen
Schlauchfolie, die zwischen dem Stahlrohr und dem
Extrusionswerkzeug aufgespannt ist, begrenzt dabei
in gleicher Weise wie bei der Unterdruckkammer die
zulässige Druckdifferenz zwischen der inneren und
äußeren Oberfläche der Schlauchfolie. Als Vorteil
ergibt sich, daß durch die elastische Anpressung
des mit der Kühlflüssigkeit geschmierten Schaumstoffkörpers der Gleitringdichtung bzw. der Gleitringdichtungen, soweit hinter der Überdruckkammer zur
Bildung abgeschotteter Kühlzonen noch weitere Gleitringdichtungen angeordnet sind, der Effekt des Andrückens der Mantelfolie an das Stahlrohr zusätzlich
verstärkt wird.

- 8 -

Die Erfindung wird im folgenden anhand der in den Zeichnungen schematisch dargestellten Beispiele näher erläutert.

Es zeigen:

Fig. 1 Eine Gleitringdichtung in einer Schlauchummantelungsanlage,

Fig. 2 eine Gleitringdichtung in einer Wickelummantelungsanlage,

Fig. 3 einen Schnitt durch eine Gleitringdichtung,

Fig. 4 eine Vorderansicht einer geteilten Gleitringdichtung,

Fig. 5 eine Vorderansicht einer geteilten Gleitringdichtung im nichtmontierten Zustand,

Fig. 6 eine Hinteransicht der Gleitringdichtung gemäß Abb. 5 im montierten Zustand,

Fig. 7 eine Anordnung mehrerer Gleitringdichtungen zur Bildung abgeschotteter Kühlzonen,

Fig. 8 eine elastisch aufgehängte Gleitringdichtung in Vorder- und Seitenansicht,

Fig. 9 einen Schnitt durch einen Extruderkopf mit Ringschlitzdüse und angeschlossener Überdruckkammer.

- 9 -

Gleichartige Teile sind in den Zeichnungen mit gleichen Bezugszeichen versehen.

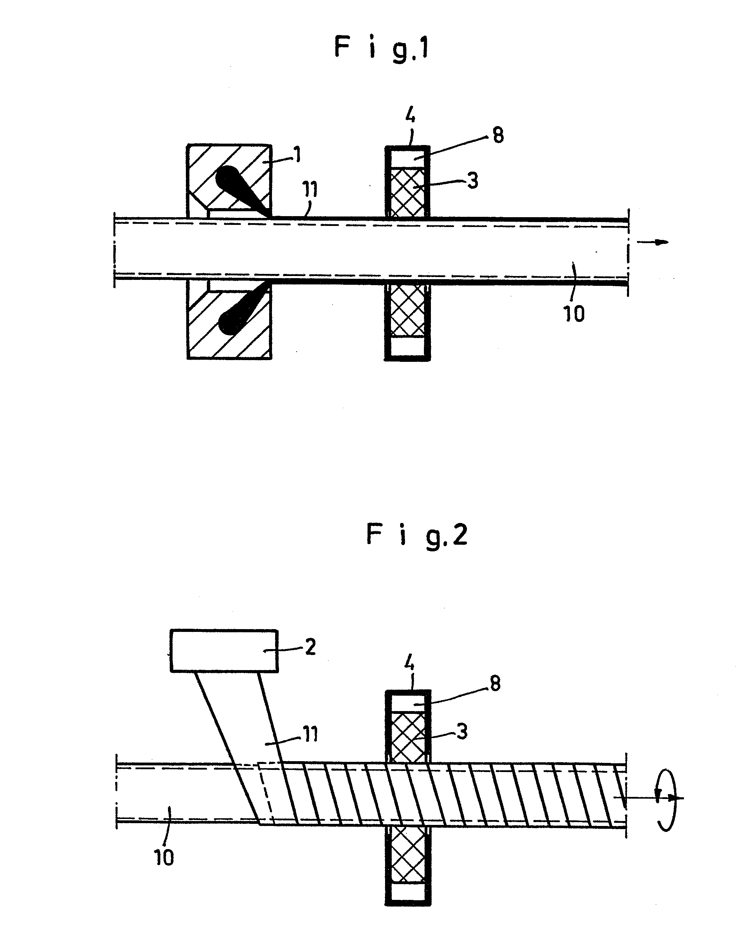

Fig. 1 zeigt schematisch den Einsatz der erfindungs- gemäßen Gleitringdichtung bei der Stahlrohrumman- telung nach dem Schlauchextrusionsverfahren. Das vorgewärmte Stahlrohr 10 wird durch den Extruderkopf mit Ringschlitzdüse 1 hindurchgeführt und mit der schlauchförmigen Kunststoffolie 11 (z.B. Polyäthylen) ummantelt.

In Produktionsrichtung hinter dem Extruderkopf ist die erfindungsgemäße Gleitringdichtung bestehend aus dem Gehäuse 4 und dem darin befindlichen Schaumstoffkörper 3 angeordnet. Die Zuleitung für das Kühlmedium ist nicht dargestellt. Der Schaumstoffkörper 3 umfaßt das umhüllte Stahlrohr 10 und liegt dabei unter Bildung eines Schmierfilmes durch die Kühlflüssigkeit dicht auf der Oberfläche der Mantelfolie 11 auf. Somit schirmt die Gleitringdichtung den zwischen der Gleitringdichtung und dem Extruderkopf 1 liegenden Teil des ummantelten Stahlrohres 10 vor dem Einfluß von Spritzwasser aus der in Produktionsrichtung gesehen hinter der Gleitringdichtung angeordneten, hier nicht näher dargestellten Kühlstrecke ab.

Fig. 2 zeigt eine der Fi. 1 entsprechende Anordnung der Gleitringdichtung in einer Anlage zur Ummantelung von Stahlrohren nach dem Wickelverfahren. Hierbei wird eine flache Wickelfolie 11 aus einer Breitschlitzdüse 2 eines Extruderkopfes extrudiert. Der zugehörige Extruder ist wiederum nicht dargestellt. Das Stahlrohr 10 wird schraubenlinienförmig an der Breitschlitzdüse 2 des Extruderkopfes vorbeigeführt und mit der extrudierten Folie 11 umwickelt. Die hinter dem Extruderkopf angeordnete Gleitringdichtung umfaßt in gleicher Weise wie im ersten Beispiel das umhüllte Stahlrohr 10 und bewirkt wiederum eine Abschottung der nachgelagerten Kühlstrecke, die hier nicht im einzelnen dargestellt ist.

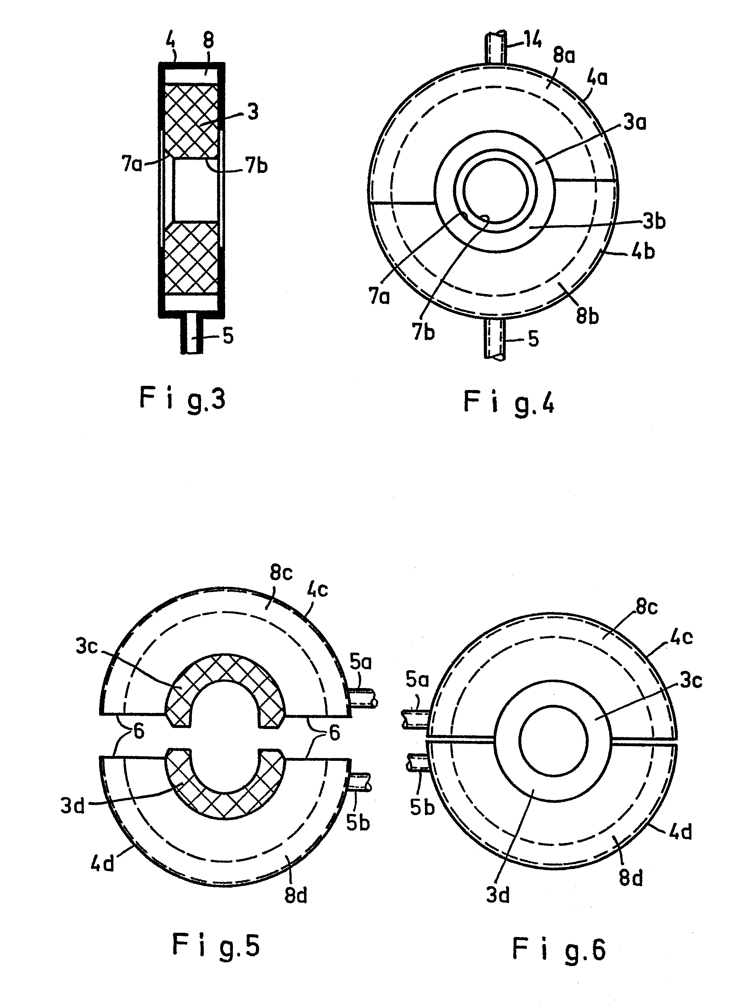

Das Schnittbild in Fig. 3 zeigt den Aufbau der Gleitringdichtung im einzelnen. Sie bsteht zunächst aus einem z.B. aus Blech gefertigten Gehäuse 4 mit einem zylinderförmigen Mantel. Die beiderseitigen Deckflächen weisen für die Durchführung der ummantelten Stahlrohre 10 entsprechende kreisförmige Öffnungen auf. Für die Zufuhr der Kühlflüssigkeit ist an der Mantelfläche des Gehäuses 4 eine Zuleitung 5 vorgesehen.

Der ringförmige Schaumstoffkörper 3 ist konzentrisch in dem zylinderförmigen Gehäuse 4 angeordnet. Der Schaumstoffkörper 3 weist ebenfalls f+r die Durchführung der ummantelten Stahlrohre 10 eine Öffnung

- 11 -

mit im wesentlichen zylinderförmiger Oberfläche 7b auf. Zur Erleichterung der Einfädelung der Stahlrohre 10 wird die Oberfläche 7a der Öffnung der Gleitringdichtung auf der Rohreintrittsseite vorteilhaft trichterförmig ausgebildet. Aus der Zeichnung ist weiterhin ersichtlich, daß auf der Innenseite des Gehäuses 4 zwischen dem Zylindermantel und der Außenoberfläche des Schaumstoffkörpers 3 ein Verteilraum 8 für die Kühlflüssigkeit angeordnet ist. Die durch die Zuleitung 5 einströmende Kühlflüssigkeit kann somit den Schaumstoffkörper 3 über seinen gesamten Umfang umgeben. Der Schaumstoffkörper 3 besitzt eine offene Porenstruktur. Somit kann die unter Druck stehende Kühlflüssigkeit durch den Schaumstoffkörper 3 hindurchströmen und an der Oberfläche 7a, 7b, die auf dem ummantelten Stahlrohr 10 aufliegt, austreten. Auf diese Weise wird auf der Oberfläche der Rohrummantelung 11 ein gleichmäßiger Kühlmittelfilm ausgebildet, der einen Schmiereffekt bewirkt und dadurch verhindert, daß der mit mechanischem Druck auf die Rohrummantelung 11 einwirkende Schaumstoffkörper 3 die Oberfläche der Rohrummantelung 11 beschädigt. Die Druckeinwirkung des Schaumstoffkörpers 3 unterstützt das erwünschte dichte Anlegen der Rohrummantelung 11 an die Oberfläche des Stahlrohres 10.

- 12 -

Fig. 4 zeigt in Vorderansicht eine Gleitringdichtung, die in Weiterbildung der Erfindung mit
einem geteilten Gehäuse 4a, 4b ausgeführt ist.
Die untere Gehäusehälfte 4b ist an die Zuleitung 5,
die obere Gehäusehälfte 4a an einen Ablauf 14 für
die Kühlflüssigkeit angeschlossen. Der Schaumstoffkörper 3a, 3b ist wie das Gehäuse 4a, 4b in zwei
Hälften aufgeteilt und zusammen mit dem Gehäuse 4a,
4b aufklappbar ausgeführt. In vorteilhafter Weiterbildung der Erfindung ist die untere Hälfte des
Schaumstoffkörpers 3b z.B. durch eine entsprechende
Gestaltung der Porenstruktur oder durch Aufbringen
einer dichten Beschichtung auf Teilen der Oberfläche 7a, 7b der Öffnung für die Rohrdurchführung
mit einem größeren Strömungswiderstand für die
Kühlflüssigkeit ausgebildet als die obere Hälfte
des Schaumstoffkörpers 3a.

Dadurch wird ein Ausgleich für die sonst durch den
unterschiedlichen hydrostatischen Druck bedingten unterschiedlichen Mengen der an der oberen bzw. unteren
Hälfte der Rohrummantelung austretenden Kühlflüssigkeit und den damit verbundenen Kühleffekt erzielt.
Da der Druckunterschied mit dem Durchmesser der zu
beschichtenden Stahlrohre 10 zunimmt, ist die Ausführung mit unterschiedlichem Strömungswiderstand
in den Teilen des Schaumstoffkörpers 3a, 3b besonders
bei der Ummantelung von Großrohren empfehlenswert.

- 13 -

Dieser Effekt läßt sich auch durch die in Fig. 5
und 6 in Vorder- und Hinteransicht einer Gleitringdichtung dargestellten konstruktiven Maßnahmen erreichen. Hierbei ist wiederum das Gehäuse 4c, 4d und
der Schaumstoffkörper 3c, 3d in zwei getrennten
Hälften ausgeführt. Beide Gehäusehälften 4c, 4d
weisen jeweils eine getrennt regelbare Zuleitung
5a, 5b für das Kühlmedium auf. Im Gegensatz zu
Fig. 4 sind die Gehäusehälften 4c, 4d in der Teilungsebene bis auf einen Teilbereich, der von dem Schaumstoffkörper 3c, 3d ausgefüllt ist, durch Gehäusewände
6 abgeschlossen. Dadurch ist der Verteilraum für die
Kühlflüssigkeit im Gegensatz zu Fig. 4, wo der Verteilraum 8a, 8b einen in sich geschlossenen Raum
bildet, in zwei voneinander völlig getrennte Bereiche
8c, 8d aufgeteilt. Durch Regelung der Kühlflüssigkeitszufuhr durch die Zuleitungen 5a, 5b können trotz
gleicher Porenstruktur des Schaumstoffkörpers 3c, 3d
in den beiden Hälften der Gleitringdichtung gleiche
Mengen der austretenden Kühlflüssigkeit eingestellt
werden.

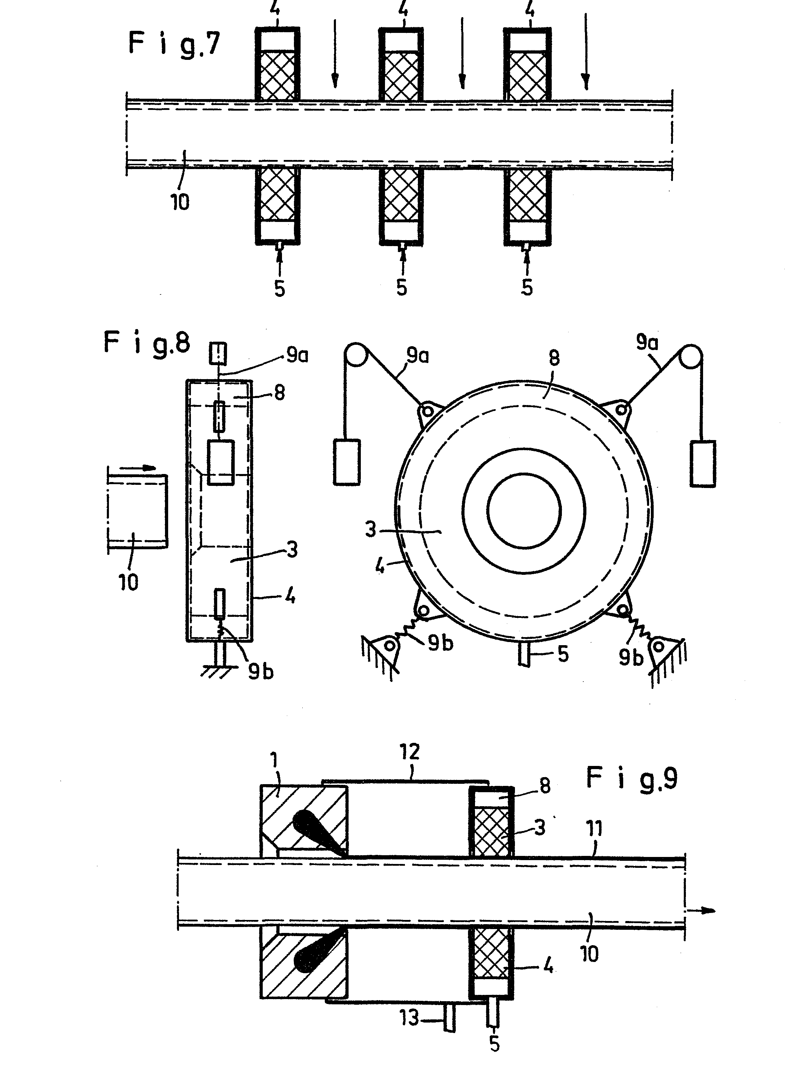

Fig. 7 zeigt drei in einer Kühlstrecke axial hintereinander angeordnete Gleitringdichtungen, durch die
gegeneinander abgeschottete Kühlzonen zwischen den
Gleitringdichtungen gebildet werden. Durch die in
jeder Kühlzone individuell einstellbare Kühlflüssigkeitsmenge, die durch die eingezeichneten, nach unten
gerichteten Pfeile symbolisiert ist, können unterschiedliche Abkühlungsbedingungen realisiert werden.

- 14 -

- 14 -

Zur Vermeidung negativer Auswirkungen durch Verlagerung der Rohrachse, z.B. infolge von Schwingungen
durch die Transporteinrichtungen der Rohrbeschichtungsanlage wird die Gleitringdichtung mit einer
elastischbeweglichen Aufhängung versehen. In Fig. 8
ist diese Aufhängung durch zwei gewichtsbelastete
Seilzüge 9a und zwei Schraubenfedern 9b realisiert.

Eine weitere vorteilhafte Ausgestaltung der Erfindung
zeigt Fig. 9; hierbei wird das Stahlrohr 10 in einer
Ringschlitzdüse mit der Kunststoffummantelung 11
versehen. Zur Verbesserung eines dichten Anlegens des
Kunststoffmantels 11 an die Oberfläche des Stahlrohres
10 ist hinter der Ringschlitzdüse 1 des Extruderkopfes
eine Überdruckkammer mit einem im wesentlichen zyliderförmigen Gehäuse 12 angeordnet, das durch die Zuleitung 13 mit Druckluft gefüllt werden kann. Während
die Überdruckkammer 12, 13 auf der Seite des Extruderkopfes durch die extrudierte Schlauchfolie 11 und
durch die Oberfläche der Ringschlitzdüse 1 dicht abgeschlossen ist, wird die erforderliche Abdichtung auf
der Rohraustrittsseite der Überdruckkammer durch die
erfindungsgemäße Gleitringdichtung mit dem Gehäuse 4,
der Kühlmittelzufuhr 5 und dem Schaumstoffkörper 3
realisiert. Diese Anordnung gewährleistet, daß das
Spritzwasser der nachfolgenden nicht dargestellten
Kühlzone nicht in die frisch ummantelten Bereiche
des Stahlrohres 10 eindringen kann und daß die Überdruckkammer 12, 13 gut abgedichtet ist, ohne durch das erforderliche, die Oberfläche der Rohrummantelung 11 berührende Dichtelement Beschädigungen der Rohrummantelung 11 hervorzurufen. Im übrigen wird durch das mechanische Andrücken der Rohrummantelung 11 auf das Stahlrohr 10 durch den das Stahlrohr 10 umschliessenden Schaumstoffkörper 3 die dichte Anlage der Rohrummantelung 11 an das Stahlrohr 10 gefödert.

------

Patentansprüche

## Patentansprüche

1. Vorrichtung zum Ummanteln eines Stahlrohres mit thermoplastischem Kunststoff, mit einem eine Schlitzdüse aufweisenden Extruderkopf zum Aufbringen des Kunststoffes, mit einer in Transportrichtung des Stahlrohres nach dem Extruderkopf angeordneten Kühlstrecke und mit mindestens einer zwischen dem Extruderkopf und der Kühlstrecke angeordneten, als das ummantelte Stahlrohr eng umschließender Gleitring ausgebildeten Druckvorrichtung zum Anpressen des Kunststoffes an das Stahlrohr, dadurch gekennzeichnet, daß der Gleitring (15) einen elastisch-weichen Schaumstoffkörper (3) mit offenen Poren und mindestens eine Zuleitung (5) für eine Kühlflüssigkeit aufweist.

2. Vorrichtung nach Anspruch 1, dadurch gekennzeichnet, daß der Schaumstoffkörper (3) in einem Gehäuse (4) angeordnet ist.

3. Vorrichtung nach Anspruch 1 oder 2, dadurch gekennzeichnet, daß der Schaumstoffkörper (3) an der Rohreintrittsseite einen Einlauftrichter (7a) aufweist.

4. Vorrichtung nach einem der Ansprüche 1 bis 3, dadurch gekennzeichnet, daß der Schaumstoffkörper (3) aus mehreren Teilstücken (3a, 3b; 3c, 3d) zusammengesetzt ist.

5. Vorrichtung nach Anspruch 4, dadurch gekennzeichnet, daß die Teilstücke als Halbringe (3a,3b; 3c,3d) ausgebildet sind, die jeweils in einer Hälfte des aufklappbaren Gehäuses (4) angeordnet sind.

6. Vorrichtung nach Anspruch 5, dadurch gekennzeichnet, daß die beiden Hälften des Gehäuses (4) in der Teilungsebene durch Gehäusewände (6) gegeneinander abgeschottet sind, wobei die Zuleitungen (5a,5b) für die Kühlflüssigkeit getrennt regelbar sind.

7. Vorrichtung nach einem der Ansprüche 1 bis 6, dadurch gekennzeichnet, daß der Schaumstoffkörper (3) in Einbaulage einen in vertikaler Richtung unterschiedlichen Porenaufbau aufweist, der einen von unten nach oben hin abnehmenden Strömungswiderstand der Kühlflüssigkeit bewirkt.

8. Vorrichtung nach einem der Ansprüche 1 bis 6, dadurch gekennzeichnet, daß der Schaumstoffkörper (3) auf Teilen seiner dem Rohr zugewandten Oberfläche (7a,7b) eine Beschichtung, z.B. aus Silikonkautschuk aufweist.

9. Vorrichtung nach einem der Ansprüche 1 bis 8, dadurch gekennzeichnet, daß der in Transportrichtung der Stahlrohre (10) erste Gleitring (15) den Dichtungsabschluß der Rohraustrittsseite einer Überdruckkammer (12,13) an dem Extruderkopf bildet, dessen Schlitzdüse als Ringschlitzdüse (1) ausgebildet ist.

-  -  -  -  -  -  -  -

F i g.1

F i g.2

F i g.3

F i g.4

F i g.5

F i g.6

Fig.7

Fig.8

Fig.9

0132218